# EUROPEAN PATENT SPECIFICATION

(11) **EP 3 659 795 B1**
(45) Date of publication and mention of the grant of the patent: **24.07.2024**
(21) Application number: 19212245.5
(22) Date of filing: 28.11.2019
(51) Int. Cl.: B32B 5/02, B32B 15/04, B32B 15/20, B32B 1/00, B32B 3/02

(54) **AN INSULATION PANEL**
ISOLIERPLATTE
PANNEAU D'ISOLATION

(30) Priority: 29.11.2018 GB 201819437
(43) Date of publication of application: 03.06.2020
(73) Proprietor: Xtratherm Limited, Navan, County Meath (IE)
(72) Inventor: KEARNEY, Danny, County Meath (IE)
(74) Representative: O'Connor, Michael Donal

(56) References cited:
- EP-A1- 2 581 216
- GB-A- 2 542 358

## Description

### Introduction

This invention relates to an insulation panel. More particularly, the invention relates to an insulation panel that may be particularly suited for use adjacent openings and movement joints in buildings where wall ties may be used.

It is known to insulate cavity walls with insulation panels to improve the thermal performance of the building. It is desirable to maintain the continuity of thermal insulation as any break or gap in the insulation considerably reduces the overall performance of the insulation in the building.

One area that is particularly difficult to maintain the continuity of thermal insulation is around openings such as doors and windows and movement joints where wall ties may be used. Due to the inherent decrease in structural rigidity around openings and movement joints, it is necessary to place wall ties between the inner blockwork and the outer brickwork around the opening/joint to prevent excessive flexure of the structure in this location. A wall tie is a metal rod that extends from a position between the inner blockwork, across the cavity to a position between the outer brickwork and effectively braces the brickwork to the blockwork, providing increased stability. In order to properly insulate the building, it is necessary to navigate around these wall ties with the absolute minimum number of gaps or breaks in the insulation possible.

Heretofore, various techniques have been used by insulation technicians to address the problem. In some cases, the insulation technician installs insulation up to the side of the wall tie remote from the opening and leaves the area between the wall tie and the opening devoid of any insulation. This is an extreme case however has a massively negative impact on the efficacy of the buildings insulation. What is more likely is that the insulation technician will insulate up to the side of the wall tie remote from the opening and thereafter cut a strip of insulation to be placed on the side of the wall tie proximal to the opening. This is also sub-optimal as there will be a gap between the adjacent sheets of insulation on either side of the wall tie roughly equivalent to the diameter of the wall tie (typically 4mm (0.004m)). This also reduces the efficacy of the insulation greatly.

More conscientious installers of insulation might cut a strip of insulation to be placed on the side of the wall tie proximal to the opening and thereafter gouge or drill a channel through the insulation at the edge of the sheet of insulation corresponding to the locations of the wall tie. In this way, the wall tie can be located in the channel and the two adjacent panels either side of the wall tie can be brought closer together, ideally with their sides in abutment with each other. The adjacent panels can thereafter be taped together. Although better than the techniques described above, this is still not entirely satisfactory as it is difficult and time consuming to drill or gouge channels into the side of the insulation and often the channels will be too large, thereby negatively impacting the efficacy of the insulation.

Other techniques include drilling a hole in the insulation panel for through passage of the wall tie or simply punching a hole through the insulation panel for the through passage of the wall tie. These techniques are not seen as desirable as they negatively impact the efficacy of the insulation board, particularly if the hole is too large and/or if the facers around the hole are damaged.

KR200447227relates to a sandwich composite panel.

It is an object of the present invention to provide an insulation panel that overcomes at least some of these problems and that provides a useful choice to the consumer.

### Statements of Invention

According to the invention there is provided an insulation panel comprising a polymer foam core sandwiched between a front facer bonded to a front face thereof and a rear facer bonded to a rear face thereof, characterized in that the polymer foam core is further sandwiched between a resiliently deformable insulation layer of mineral wool bonded to a first side thereof and a resiliently deformable insulation layer of mineral wool bonded to a second side thereof.

By having such an insulation panel, the insulation panel can be brought into close contact with the wall tie and the exposed resiliently deformable layer of mineral wool will be compressible and will wrap around the wall tie and bridge the gap to the adjacent panel of the insulation on the other side of the wall tie. In this way, an insulation seal between the two panels of insulation will be formed, thereby improving the thermal rating of the insulation. Furthermore, it will not be necessary for the insulation technician to gouge or drill into an insulation panel, thereby obviating the possibility of the hole being made too large or in the wrong position, as well as reducing the length of time required for installation of the insulation. Advantageously, by using a mineral wool in this position, the mineral wool will act as a useful fire barrier in the cavity wall, preventing the spread of fire through the building.

In one embodiment of the invention there is provided an insulation panel in which the depth of the mineral wool from front to back of the insulation panel is greater than the combined depth of the polymer foam core and the facers from front to back so that the mineral wool protrudes beyond one of the front face and the rear face of the insulation panel. In this way, as the insulation board is pushed into the cavity between the blockwork and the brickwork, the mineral wool will engage against the blockwork and the brickwork, thereby helping to hold the insulation panel spaced apart from the outer brickwork and at the same time will help to maintain the insulation panel in position in the cavity. Furthermore, the mineral wool will provide a useful fire barrier in the cavity wall.

In one embodiment of the invention there is provided an insulation panel in which the mineral wool protrudes beyond both the front face and the rear face of the insulation panel. This is seen as a useful embodiment of the invention as it will ensure that the insulation panel is held in position in the cavity though the frictional forces exerted on the blockwork and the brickwork by the mineral wool and furthermore will ensure that the insulation panel is held spaced apart from the outer brickwork irrespective of how the insulation panel is installed. By keeping the panel away from the outer brickwork, water ingress through the outer brickwork will not negatively impact the insulation panel.

In one embodiment of the invention there is provided an insulation panel in which the mineral wool protrudes beyond the face of the insulation panel by a distance of the order of 0.005m.

In one embodiment of the invention there is provided an insulation panel in which the insulation panel is substantially cuboid-shaped with rectangular-shaped faces.

In one embodiment of the invention there is provided an insulation panel in which the insulation panel is substantially L-shaped in horizontal cross section. By having an L-shaped insulation panel, this will enable the panel to facilitate different blockwork configurations in the building. In the case of the L-shaped panel, instead of having mineral wool on both sides of the insulation panel, there is provided mineral wool on one side of the insulation panel and on at least part of one face of the insulation panel.

In one embodiment of the invention there is provided an insulation panel in which the insulation panel has a width of the order of 0.225m. This is seen as another particularly preferred embodiment of the present invention. By providing an insulation panel with a width of 0.225, the insulation panel may also be used to aid in the positioning of wall ties around an opening or movement joint. The insulation panel may first be placed with one side in alignment with the edge of the opening or movement joint and the wall ties may thereafter be positioned along the other side edge of the insulation panel. In this way, the wall ties will be the correct spacing apart from the opening or movement joint.

In one embodiment of the invention there is provided an insulation panel in which the resiliently deformable insulation layer of mineral wool bonded to the side of the polymer foam core has a width of the order of 0.025m. By having a width of 0.025m, the insulation panel will provide a 30-minute fire rating. The fire resistance could however be increased further by increasing the thickness of the resiliently deformable insulation layer.

The invention there is provided an insulation panel in which there is provided a cover plate mounted on one side of the insulation panel sandwiching the resiliently deformable insulation layer of mineral wool on one side of the polymer foam core between the cover plate and the polymer foam core. By having a cover plate, the cover plate can provide a cover to the insulation at the opening in the gap between the brickwork and the blockwork. Plaster or other materials can be adhered to the cover plate to finish off the interior of the opening.

In one embodiment of the invention there is provided an insulation panel in which the depth of the cover plate from front to back of the insulation panel is greater than the depth of the mineral wool from front to back. In this way, the cover plate will sit along the side face of the blockwork and the brickwork.

In one embodiment of the invention there is provided an insulation panel in which the outer surface of the cover plate has a plurality of raised projections extending outwardly therefrom. By having raised projections, the projections will act as a key for any covering material that is to be adhered to the cover plate.

In one embodiment of the invention there is provided an insulation panel in which the cover plate has an arm extending inwardly from the inner surface of the cover plate to engage one of the polymer foam core and the resiliently deformable insulation layer of mineral wool.

In one embodiment of the invention there is provided an insulation panel in which the arm is cranked at a right angle intermediate its ends and comprises a first section extending away from the inner surface of the cover plate substantially perpendicular to the plane of the cover plate and a second section connected to the end of the first section, the second section extending rearwardly from the first section substantially parallel to the plane of the cover plate.

In one embodiment of the invention there is provided an insulation panel in which there is provided a slot formed between the polymer foam core and the resiliently deformable insulation layer for reception and retention of the second section of the arm. This is seen as a particularly simple way of mounting the cover plate on the insulation panel.

In one embodiment of the invention there is provided an insulation panel in which the distance between the second section of the arm and the cover plate is equal to or less than the width of the resiliently deformable insulation layer of mineral wool. In this way, the insulation will form a force fit between the second section of arm and the body of the cover plate, thereby holding the cover plate in position. This is seen as a particularly simple and inexpensive construction.

In one embodiment of the invention there is provided an insulation panel in which the arm comprises at least one tooth for engagement of the one of the polymer foam core and the resiliently deformable insulation layer of mineral wool.

In one embodiment of the invention there is provided an insulation panel in which the polymer foam core comprises a polyisocyanurate (PIR) foam.

In one embodiment of the invention there is provided an insulation panel in which the polymer foam core comprises a phenolic foam.

In one embodiment of the invention there is provided an insulation panel in which the polymer foam core comprises a polyurethane foam. Alternatively, the polymer foam core comprises expanded polystyrene (XPD) foam.

In one embodiment of the invention there is provided an insulation panel in which the insulation panel has an aged thermal conductivity, λ, ≤ to 0.032 W.m⁻¹.K⁻¹.

In one embodiment of the invention there is provided an insulation panel in which the insulation panel has an aged thermal conductivity, λ, ≤ to 0.025 W.m⁻¹.K⁻¹.

In one embodiment of the invention there is provided an insulation panel in which the insulation panel has an aged thermal conductivity, λ, ≤ to 0.021 W.m⁻¹.K⁻¹.

In one embodiment of the invention there is provided an insulation panel in which the insulation panel has an aged thermal conductivity, λ, ≤ to 0.018 W.m⁻¹.K⁻¹.

In one embodiment of the invention there is provided an insulation panel in which the facer is a metal foil.

In one embodiment of the invention there is provided an insulation panel in which the mineral wool is replaced by one of a glass wool and a ceramic fibre material.

In one embodiment of the invention there is provided a method for the manufacture of an insulation panel comprising the steps of:
providing a first facer;
laying foam reactants onto the first facer;
providing a second facer on top of the foam reactants and the first facer;
allowing the foam reactants to expand and harden, thereby forming a polymeric foam core;
cutting the polymeric foam core and facers into panels;
providing a web of resiliently deformable insulation mineral wool;
cutting the web of mineral wool into strips in which the length dimensions of the strips are equal to the length dimension of the panel and the width dimensions of the strips are equal to or greater than the depth dimension of the panel;
bonding a first strip of mineral wool to one side of the panel and bonding a second strip of mineral wool to the opposite side of the panel.

By having such a method, there is provided a simple, efficient and inexpensive way of manufacturing the insulation panel.

In one embodiment of the invention there is provided a method for the manufacture of an insulation panel in which the step of bonding the strips of mineral wool to the sides of the panel comprises bonding the strips of mineral wool to the sides of the panel so that the strips of mineral wool protrude beyond one of the front face and the rear face of the panel.

In one embodiment of the invention there is provided a method for the manufacture of an insulation panel in which the step of cutting the web of mineral wool into strips further comprises cutting the web of mineral wool into strips that are 0.005m wider than the depth dimension of the panel.

In one embodiment of the invention there is provided a method for the manufacture of an insulation panel in which the method comprises the additional step of cutting a quadrant out of the insulation panel.

In one embodiment, there is provided a method for the manufacture of an insulation panel in which the method comprises the additional step of cutting a V-shaped groove out of one face of the insulation panel, and instead of bonding the second strip of mineral wool to the opposite side of the panel, the method comprises the alternative step of bonding the second strip of mineral wool to the face of the panel opposite to the face of the panel with the groove.

In one embodiment of the invention there is provided a method for the manufacture of an insulation panel in which the step of cutting the polymeric foam core and facers into panels and the step of providing a web of resiliently deformable insulation mineral wool comprise cutting the polymeric foam into widths and providing the web of resiliently deformable insulation mineral wool in thicknesses so that the combined width of the resulting insulation panel is 0.225m.

In one embodiment of the invention there is provided a method for the manufacture of an insulation panel in which the method comprises the step of attaching a cover plate to one side of the insulation panel, thereby sandwiching the resiliently deformable insulation layer of mineral wool on one side of the polymer foam core between the cover plate and the polymer foam core.

In one embodiment of the invention there is provided a method for the manufacture of an insulation panel in which the step of attaching a cover plate to one side of the insulation panel comprises inserting an arm of the cover plate into a slot formed between the resiliently deformable insulation layer of mineral wool and the polymer foam core.

### Detailed Description of the Invention

The invention will now be more clearly understood from the following description of some embodiments thereof given by way of example only with reference to the accompanying drawings, in which:-
Figure 1 is a perspective view of an insulation panel according to the invention;
Figure 2 is a front view of the insulation panel of Figure 1;
Figure 3 is a top plan view of the insulation panel of Figure 1;
Figure 4 is a perspective view of a second embodiment of insulation panel according to the invention;
Figure 5 is a front view of the insulation panel of Figure 4;
Figure 6 is a top plan view of the insulation panel of Figure 4;
Figure 7 is a perspective view of a third embodiment of insulation panel according to the invention, similar to the second embodiment of Figure 4;
Figure 8 is a plan view of the insulation panel of Figure 8 during construction;
Figure 9 is a perspective view of a third embodiment of insulation panel according to the invention;
Figure 10 is a perspective view of the cover plate incorporated into the insulation panel of Figure 9;
Figure 11 is a top plan view of the cover plate of the insulation panel of Figure 9;
Figure 12 is a diagrammatic representation of a building illustrating the correct location for wall ties;
Figure 13 is a diagrammatic representation of the insulation panel of Figures 1 to 3 inclusive shown in use;
Figure 14 is a diagrammatic representation of the insulation panel of Figures 7 and 8 inclusive shown in use;
Figure 15 is a diagrammatic representation of the insulation panel of Figures 1 to 3 inclusive shown in use as an eaves closer; and
Figure 16 is a diagrammatic representation of an insulation panel of Figures 1 to 3 inclusive shown in use at a party wall.

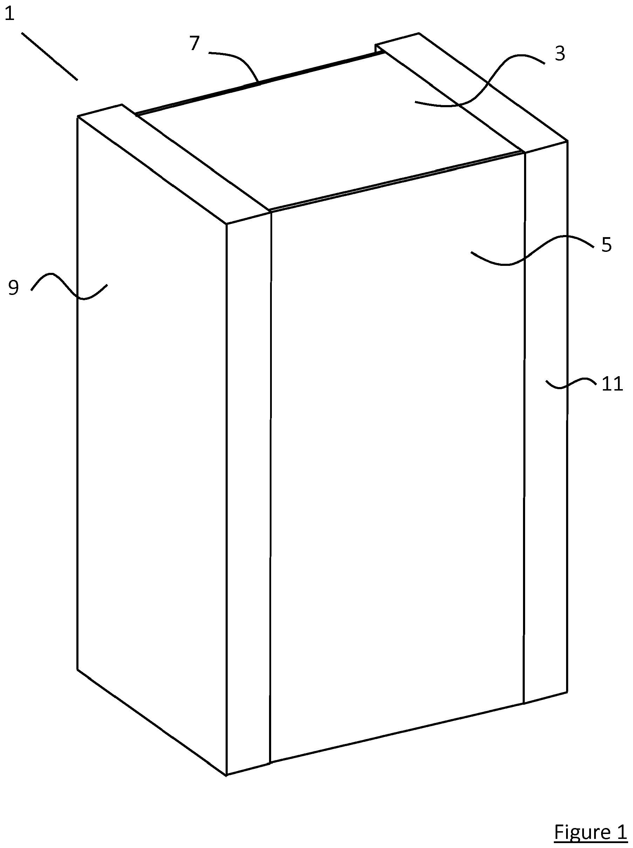

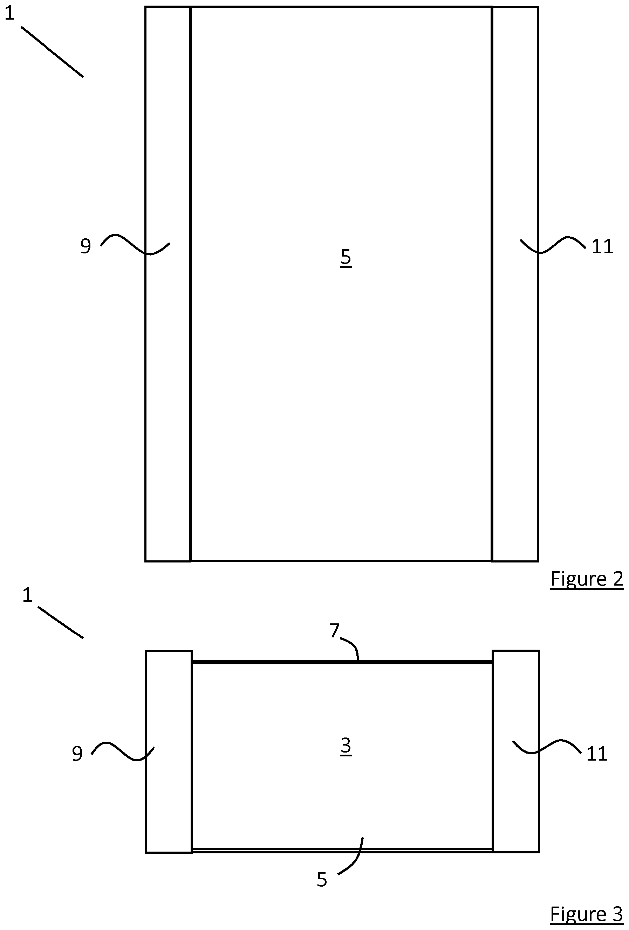

Referring to Figures 1 to 3, there is shown an insulation panel, indicated generally by the reference numeral 1, comprising a polymer foam core 3 sandwiched between a front facer 5 bonded to a front face thereof and a rear facer 7 bonded to a rear face thereof. There is further provided a pair of resiliently deformable insulation layers 9, 11, one on either side of the polymer foam core so that the core is further sandwiched between a resiliently deformable insulation layer bonded to a first side thereof and a resiliently deformable insulation layer bonded to a second side thereof. Referring specifically to Figure 3, the pair of resiliently deformable insulation layers 9, 11 each protrude beyond the rear facer 7. Preferably, the pair of resiliently deformable insulation layers protrude beyond the rear facer 7 by approximately 5mm (0.005m).

In the embodiment shown, the core 3 is a polymer foam core such as phenolic, polyisocyanurate or polyurethane foam core. The facers are a metal foil material, such as an aluminium foil. The foil may be perforated if desired. The resiliently deformable insulation layers 9, 11 are preferably a mineral wool material. Mineral wool is seen as preferred as it provides useful fire retardant properties and furthermore will be able to mould around the wall tie (not shown), providing a more effective insulation layer in this region.

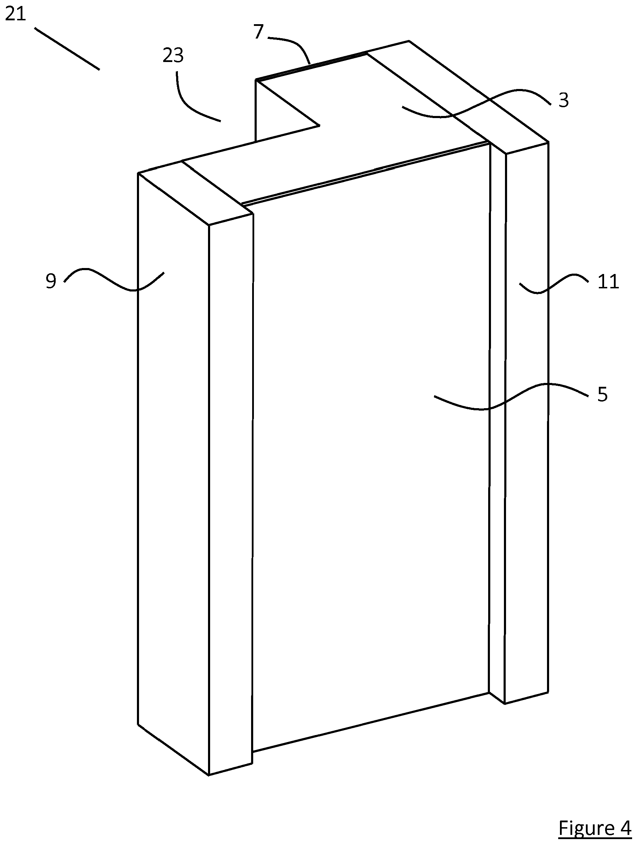

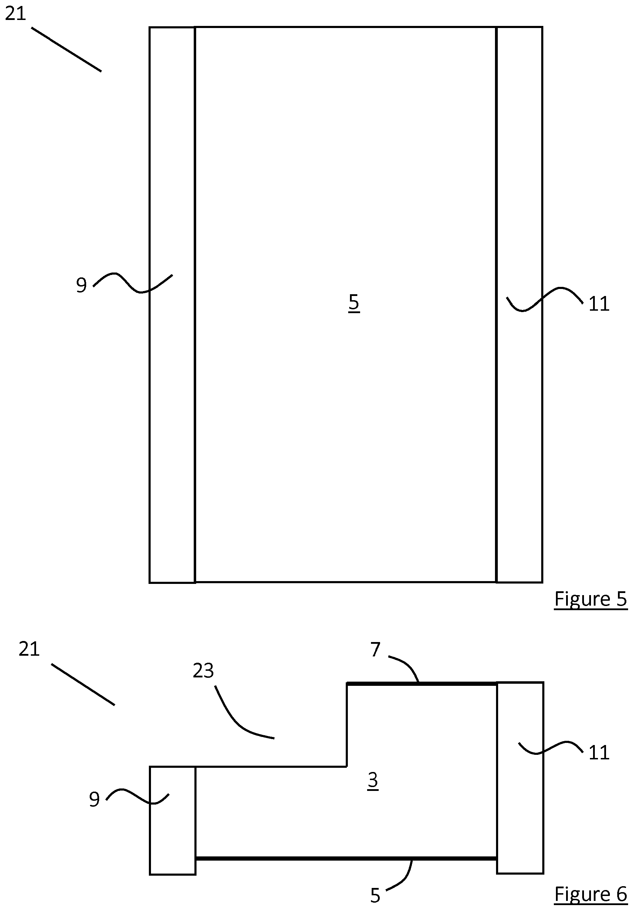

Referring to Figures 4 to 6, there is shown a second embodiment of insulation panel, indicated generally by the reference numeral 21, where like parts have been given the same reference numeral as before. The insulation panel 21 differs from the insulation panel 1 in that a rear quadrant 23 has been cut out of the insulation panel. As will described in more detail below, this configuration will suit certain construction techniques to provide an effective insulation barrier. Furthermore, the resiliently deformable insulation layers 9, 11 are shown protruding beyond the front facer 5 rather than the rear facer 7 to demonstrate an alternative.

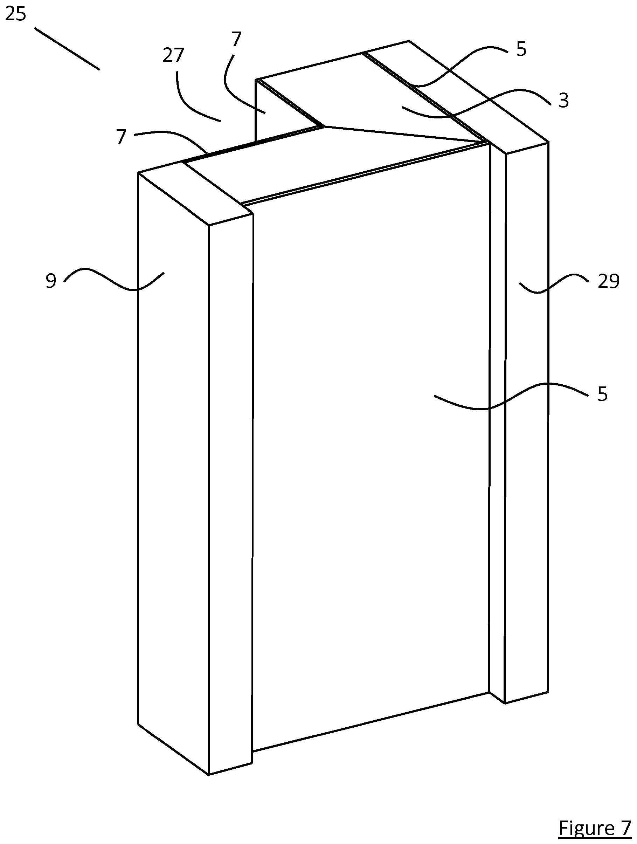

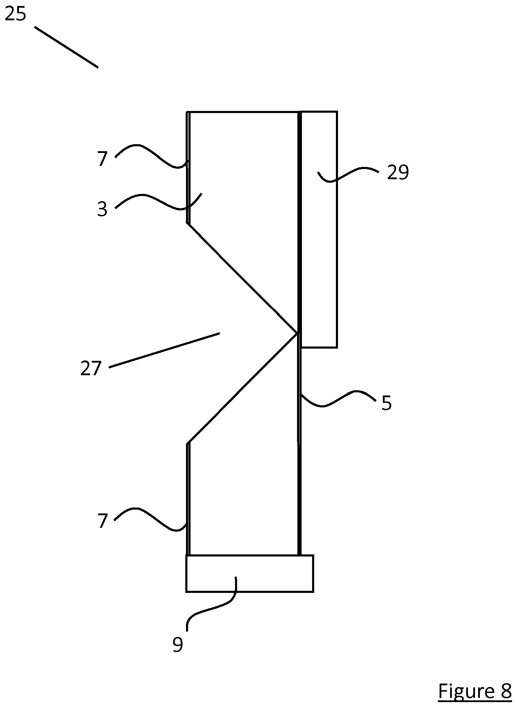

Referring now to Figures 7 and 8, there is shown a third embodiment of insulation panel, indicated generally by the reference numeral 25, where like parts have been given the same reference numeral as before. The insulation panel 25 is similar to the insulation panel 21 of Figures 4 to 6 inclusive in that it is substantially L-shaped. However, rather than having a quadrant cut therefrom, the insultation panel 25 has a V-shaped groove 27 (as best illustrated in Figure 8) cut from a first face thereof and instead of having a resiliently deformable insulation layer 11 adhered to the second side of the insulation panel, instead there is a resiliently deformable insulation layer 29 adhered to part of the face of the insulation panel opposite to the face with the V-shaped groove. The V-shaped groove is a 90° cut so that when folded together, the arms will form an L-shaped panel. The facer 5 will act as a live hinge in this instance. The resiliently deformable insulation layer 29 protrudes beyond the live hinge when the insulation panel is in a folded configuration as shown in Figure 7.

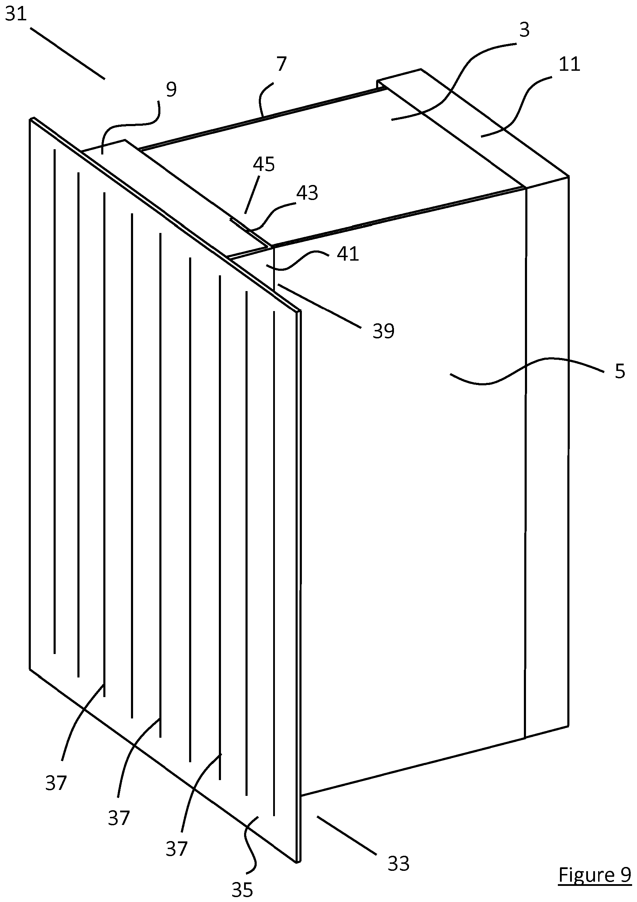

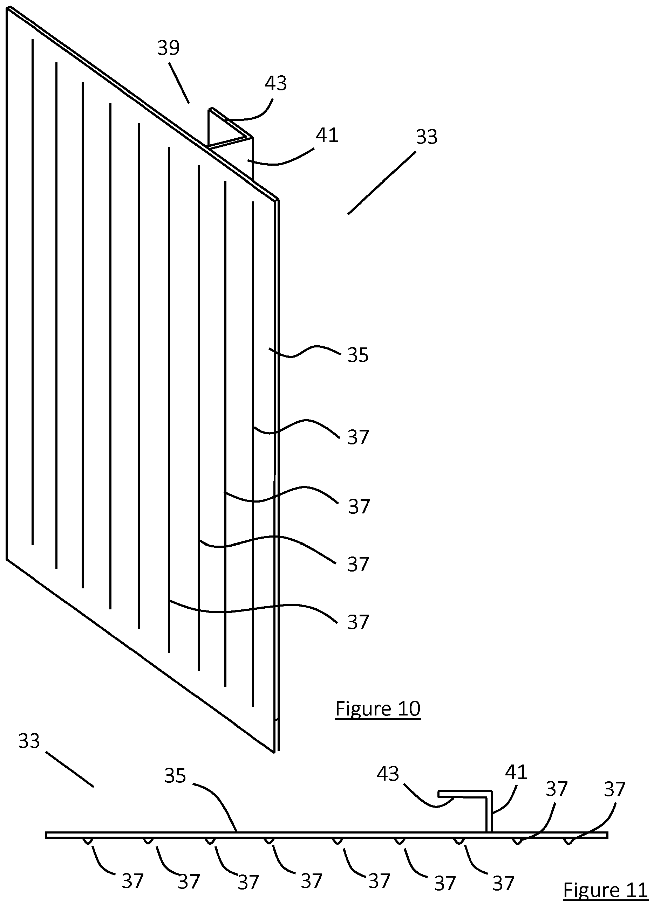

Referring now to Figures 9 to 11, there is shown a fourth embodiment of insulation panel, indicated generally by the reference numeral 31, where like parts have been given the same reference numeral as before. The insulation panel 31 differs from the insulation panel 1 in that a slot 45 has been formed between the core 3 and the resiliently deformable insulation layer 9. There is further provided a cover plate, indicated generally by the reference numeral 33, mounted on the side of the insulation panel. The cover plate 33 comprises a substantially planar sheet of material 35, preferably plastic material, on which there are provided a plurality of protrusions 37 extending outwardly therefrom. The protrusions provide a key for engagement of a render such as plaster or the like when the insulation panel is used to seal the gap between the inner layer of blockwork and the outer layer of brickwork. The cover plate 33 further comprises an inwardly depending arm 39 cranked intermediate its ends and having a first section 41 that protrudes inwardly from the sheet of material 35 substantially perpendicular to the plane of the sheet 35 and a second section 43 substantially orthogonal to the first section and coplanar to the sheet of material. The second section 43 sits in the slot 45 and engages the resiliently deformable insulation layer 9 between the second section 43 and the sheet of material 35, thereby holding the cover plate and the core 3 of the insulation panel together.

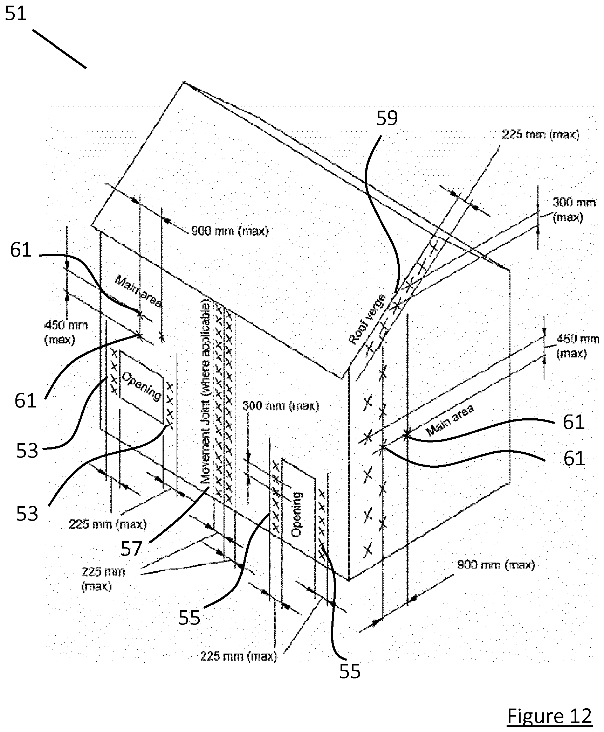

Referring now to Figure 12, there is shown a diagrammatic representation of a building, indicated generally by the reference numeral 51, illustrating the correct location for wall ties, including wall ties 53 for use around a window, wall ties 55 for use around a door, wall ties 57 for use adjacent a movement joint, wall ties 59 for use at a roof verge, and wall ties 61 for use in areas away from areas of increased flexure. The wall ties 53 for use around a window are ideally spaced a maximum distance of 225mm (0.225m) from the edge of the window. The wall ties 55 for use around a door are also ideally spaced a maximum distance of 225mm (0.225m) from the edge of the door and spaced 300mm (0.3m) vertically with respect to each other. The wall ties 57 for use adjacent a movement joint are ideally spaced a maximum distance of 225mm (0.225m) from the edge of the movement joint. The wall ties 59 for use at a roof verge are preferably spaced a maximum distance of 225mm (0.225m) from the edge of the roof verge and spaced 300mm (0.3m) apart from each other. Finally, the wall ties 61 for use in areas away from areas of increased flexure are spaced a maximum of 900mm (0.9m) apart in a horizontal direction and no more than 450mm (0.45m) apart from each other in a vertical direction.

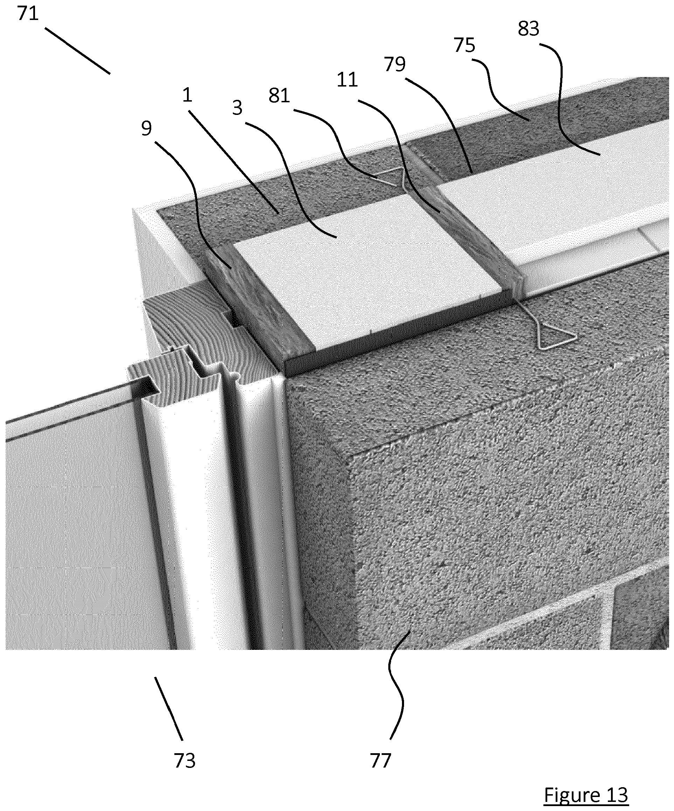

Referring now to Figure 13, there is shown a diagrammatic representation of the insulation panel 1 of Figures 1 to 3 inclusive shown in use in a building 71. In the embodiment shown, there is provided an opening for a window 73. The building comprises an inner layer of blockwork 75 and an outer layer of blockwork 77. In other areas in the specification, we have described inner layers of blockwork and outer layers of brickwork however it will be understood that this will vary depending on the type of construction and in the present case, there is both an inner and an outer layer of blockwork. A cavity 79 is formed between the inner layer of blockwork 75 and the outer layer of blockwork 77. A wall tie 81, bridges across the cavity 79 from the inner layer of blockwork 75 to the outer layer of blockwork 77. The wall tie is spaced 225mm (0.225m) from the edge of the opening. The wall tie 81 is shown resting on top of the layer of blocks however it will be understood that other blocks will be laid on top of the wall tie as part of the inner layer of blockwork 75 and the outer layer of blockwork 77 thereby holding the wall tie in position.

Importantly, the wall tie 81 is able to be subsumed in the resiliently deformable insulation layer 11 as the resiliently deformable insulation layer 11 of mineral wool moulds itself around the wall tie. The resiliently deformable insulation layer 11 of mineral wool still, at the same time, forms a good insulation seal with the next adjacent insulation panel 83. If desired, the wall tie could be pushed through the resiliently deformable insulation layer 11 of mineral wool. Due to the nature of the mineral wool, it will clasp around the wall tie, forming an insulation bond around the wall tie. It will be appreciated that if the insulation panel 31 of Figures 7 to 9 were used in this instance, it would be positioned so that the cover plate 33 would sit along the exposed edge of the inner blockwork 75 and the outer blockwork 77.

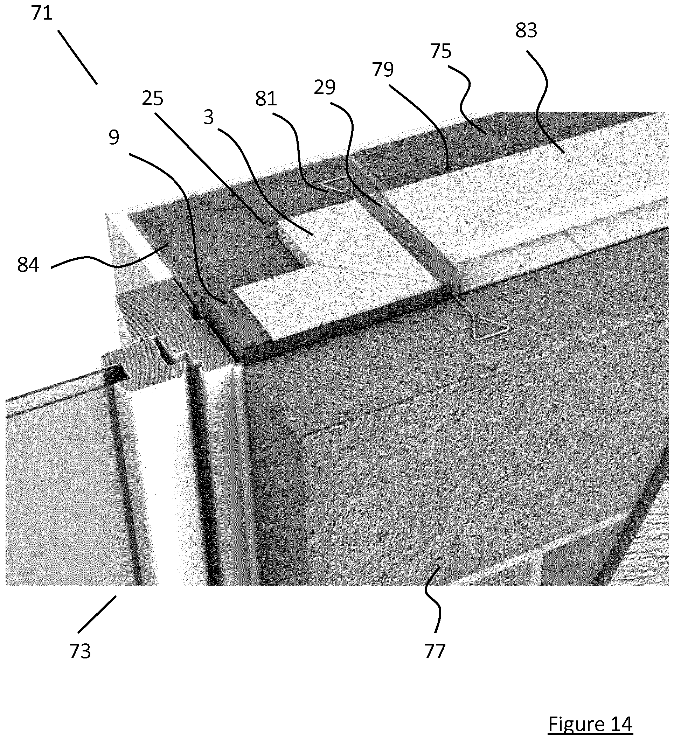

Referring to Figure 14, there is shown a diagrammatic representation of the insulation panel 25 of Figures 7 and 8 inclusive shown in use in a building 71. As mentioned above, certain building techniques result in different endings to the layers of brickwork and blockwork. It is not uncommon for the final brick or block 84 to be placed at a 90 degree angle to the rest of the course of bricks or blocks. In this instance, the substantially L-shaped insulation panel 25 will be useful to fill the space between the end block 84 and the wall tie 81.

In order to achieve the L-shaped configuration of the insulation panel, a cuboid shaped section 23 can be cut out of the insulation panel or alternatively a (90 degree) V-shaped groove may be cut out of one side of the insulation panel. The facer 5 on the opposite side of the insulation panel will act as a live hinge as the two parts of the insulation panel core on either side of the V-shaped groove are brought together closing the groove until the sides of the groove are in engagement with each other.

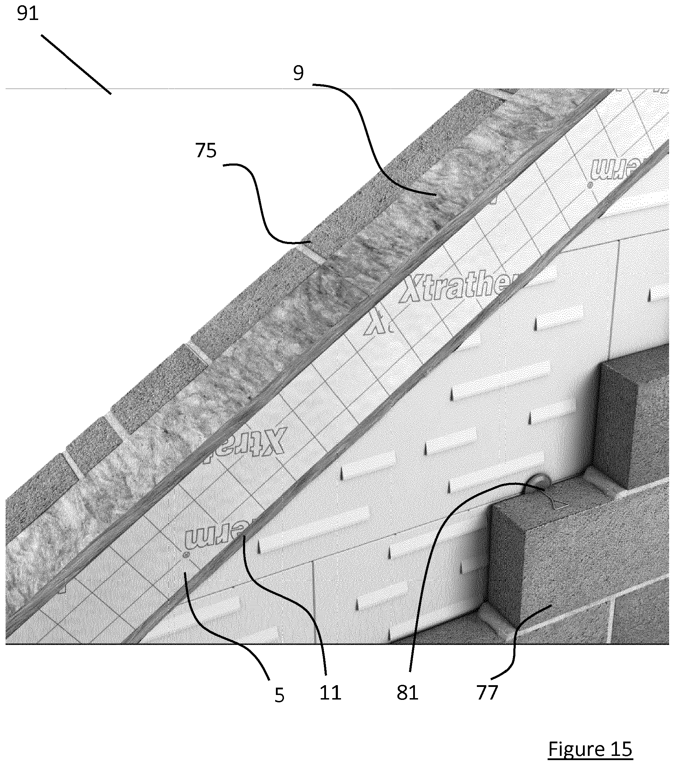

Referring now to Figure 15, there is shown a diagrammatic representation of the insulation panel 1 of Figures 1 to 3 inclusive shown in use as an eaves closer in the roof 91 of a building. Like parts have been given the same reference numeral as before. It will be understood that the insulation panel 1 according to the present invention is particularly suited for use in this area due to the inherent flexibility and resilience as a result of the pair of resiliently deformable insulation layers 9, 11 on either side of the core 3. These will enable the insulation technician to handle a degree of building tolerance and will enable the fast and efficient installation of the insulation.

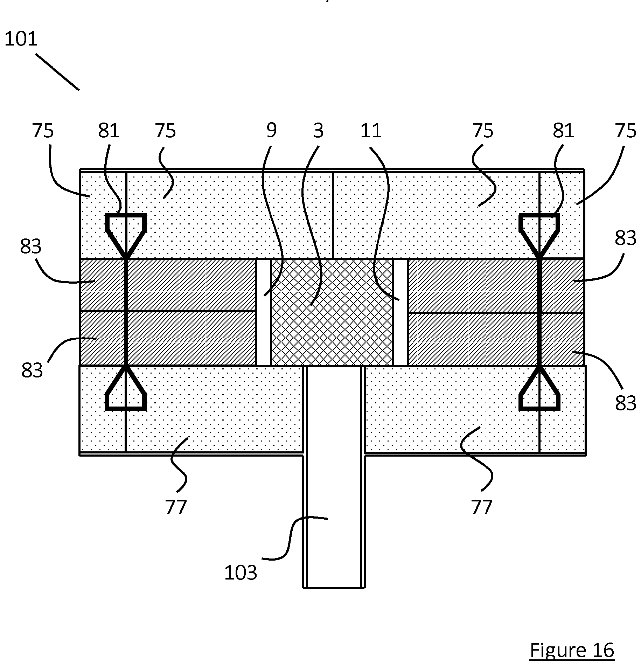

Referring now to Figure 16, there is shown a diagrammatic representation of the insulation panel 1 of Figures 1 to 3 inclusive shown in use as partition wall joint 101 cavity closer. Like parts have been given the same reference numeral as before. At this location, a partition wall 103 is captured between inner blocks 77. It will be understood that the insulation panel 1 according to the present invention is particularly suited for use in this area due to the inherent flexibility and resilience as a result of the pair of resiliently deformable insulation layers 9, 11 on either side of the core 3. These will enable the insulation technician to handle a degree of building tolerance and will enable the fast and efficient installation of the insulation.

The present invention further extends to a method of manufacturing an insulation board. The method comprises the steps of providing a first facer, preferably off a roller onto a conveyor belt. The method comprises the step of laying foam reactants onto the first facer and providing a second facer, again off a roller, on top of the foam reactants and the second facer. The foam reactants are allowed to expand and harden, thereby forming a polymeric foam core. This may entail delivering the foam along the conveyor through an oven. Once the foam has hardened, the foam is led to a cutting station in which the polymeric foam core and facers are cut into panels. A web of resiliently deformable insulation mineral wool is provided and cut into strips in which the length dimensions of the strips are equal to the length dimension of the panel and the width dimensions of the strips are equal to or preferably greater than the depth dimension of the panel. A first strip of mineral wool is bonded to one side of the panel and a second strip of mineral wool is bonded to the opposite side of the panel. In this way, there is a simple manufacturing method for creating the panels. The panels may then be packed in a plastic material in a packing station ready for storage and subsequent transport to a site for use in the construction of a building.

Throughout the specification, different insulation materials have been discussed including phenolic foam, polyisocyanurate foam, polyurethane foam, mineral wool and the like. It is envisaged that the insulation panel will have an aged thermal conductivity, A, ≤ to 0.025 W.m⁻¹.K⁻¹. Preferably, the insulation panel will have an aged thermal conductivity, λ, ≤ to 0.021 W.m⁻¹.K⁻¹. Ideally, the insulation panel will have an aged thermal conductivity, λ, ≤ to 0.018 W.m⁻¹.K⁻¹. The facers are preferably aluminium metal facers that may be perforated.

## Claims

1. An insulation panel (1, 21, 25, 31) comprising a polymer foam core (3) sandwiched between a front facer (5) bonded to a front face thereof and a rear facer (7) bonded to a rear face thereof, **characterized in that** the polymer foam core is further sandwiched between an exposed resiliently deformable insulation layer of mineral wool (9) bonded to a first side thereof and an exposed resiliently deformable insulation layer of mineral wool (11) bonded to a second side thereof.

2. An insulation panel (1, 21, 25, 31) as claimed in claim 1 in which the depth of the mineral wool (9, 11) from front to back of the insulation panel is greater than the combined depth of the polymer foam core (3) and the facers (5, 7) from front to back so that the mineral wool protrudes beyond one of the front face and the rear face of the insulation panel.

3. An insulation panel (1, 21, 25, 31) as claimed in claim 2 in which the mineral wool (9, 11) protrudes beyond both the front face and the rear face of the insulation panel.

4. An insulation panel (1, 31) as claimed in any preceding claim in which the insulation panel is cuboid-shaped with rectangular-shaped faces.

5. An insulation panel (21, 25) as claimed in claims 1 to 3 in which the insulation panel is L-shaped in horizontal cross section.

6. An insulation panel (1, 21, 25, 31) as claimed in any preceding claim in which the insulation panel has a width of the order of 0.225m.

7. An insulation panel (1, 21, 25, 31) as claimed in claim 6 in which the resiliently deformable insulation layer of mineral wool (9, 11) bonded to the side of the polymer foam core (3) has a width of the order of 0.025m.

8. An insulation panel (31) as claimed in any preceding claim in which there is provided a cover plate (33) mounted on one side of the insulation panel sandwiching the resiliently deformable insulation layer of mineral wool (9) on one side of the polymer foam core (3) between the cover plate (33) and the polymer foam core (3).

9. An insulation panel (31) as claimed in claim 8 in which the cover plate (33) has an arm (39) extending inwardly from the inner surface of the cover plate to engage one of the polymer foam core (3) and the resiliently deformable insulation layer of mineral wool (9), and in which the arm (39) is cranked at a right angle intermediate its ends and comprises a first section (41) extending away from the inner surface of the cover plate perpendicular to the plane of the cover plate and a second section (43) connected to the end of the first section (41), the second section (43) extending rearwardly from the first section parallel to the plane of the cover plate, and in which there is provided a slot (45) formed between the polymer foam core (3) and the resiliently deformable insulation layer (9) for reception and retention of the second section (43) of the arm (39).

10. An insulation panel (1, 21, 25, 31) as claimed in any preceding claim in which the mineral wool is replaced by one of a glass wool and a ceramic fibre material.

11. A method for the manufacture of an insulation panel (1, 21, 25, 31) comprising the steps of:
providing a first facer (5);
laying foam reactants onto the first facer (5);
providing a second facer (7) on top of the foam reactants and the first facer;
allowing the foam reactants to expand and harden, thereby forming a polymeric foam core (3);
cutting the polymeric foam core (3) and facers (5, 7) into panels;
providing a web of resiliently deformable insulation mineral wool;
cutting the web of mineral wool into strips (9, 11) in which the length dimensions of the strips are equal to the length dimension of the panel and the width dimensions of the strips are equal to or greater than the depth dimension of the panel;
bonding a first strip of mineral wool (9) to one side of the panel and bonding a second strip of mineral wool (11) to the opposite side of the panel.

12. A method for the manufacture of an insulation panel (1, 21, 25, 31) as claimed in claim 11 in which the step of bonding the strips of mineral wool (9, 11) to the sides of the panel comprises bonding the strips of mineral wool to the sides of the panel so that the strips of mineral wool protrude beyond one of the front face and the rear face of the panel.

13. A method for the manufacture of an insulation panel (21) as claimed in any one of claims 11 or 12 in which the method comprises the additional step of cutting a quadrant (23) out of the insulation panel.

14. A method for the manufacture of an insulation panel (25) as claimed in any one of claims 11 or 12 in which the method comprises the additional step of cutting a V-shaped groove (27) out of one face of the insulation panel, and instead of bonding the second strip of mineral wool to the opposite side of the panel, the method comprises the alternative step of bonding the second strip of mineral wool (29) to the face of the panel opposite to the face of the panel with the groove.

15. A method for the manufacture of an insulation panel (31) as claimed in any one of claims 11 to 14 in which the method comprises the step of attaching a cover plate (33) to one side of the insulation panel, thereby sandwiching the resiliently deformable insulation layer of mineral wool (9) on one side of the polymer foam core (3) between the cover plate (33) and the polymer foam core (3).

## Patentansprüche

1. Isolierplatte (1, 21, 25, 31), die einen Polymerschaumkern (3) umfasst, der zwischen einer an eine Vorderseite davon geklebten vorderen Deckbahn (5) und einer an eine Rückseite davon geklebten hinteren Deckbahn (7) angeordnet ist, **dadurch gekennzeichnet, dass** der Polymerschaumkern ferner zwischen einer an eine erste Seite davon geklebten freiliegenden, flexibel verformbaren Isolierschicht aus Mineralwolle (9) und einer an eine zweite Seite davon geklebten freiliegenden, flexibel verformbaren Isolierschicht aus Mineralwolle (11) angeordnet ist.

2. Isolierplatte (1, 21, 25, 31) nach Anspruch 1, wobei die Tiefe der Mineralwolle (9, 11) von der Vorder- bis zur Rückseite der Isolierplatte größer ist als die Gesamttiefe des Polymerschaumkerns (3) und der Deckbahnen (5, 7) von der Vorder- bis zur Rückseite, so dass die Mineralwolle über die Vorderseite oder die Rückseite der Isolierplatte hinausragt.

3. Isolierplatte (1, 21, 25, 31) nach Anspruch 2, wobei die Mineralwolle (9, 11) sowohl über die Vorderseite als auch über die Rückseite der Isolierplatte hinausragt.

4. Isolierplatte (1, 31) nach einem der vorhergehenden Ansprüche, wobei die Isolierplatte quaderförmig ist und rechteckige Flächen aufweist.

5. Isolierplatte (21, 25) nach Anspruch 1 bis 3, wobei die Isolierplatte im horizontalen Querschnitt L-förmig ist.

6. Isolierplatte (1, 21, 25, 31) nach einem der vorhergehenden Ansprüche, wobei die Isolierplatte eine Breite von etwa 0,225 m aufweist.

7. Isolierplatte (1, 21, 25, 31) nach Anspruch 6, wobei die an die Seite des Polymerschaumkerns (3) geklebte, flexibel verformbare Isolierschicht aus Mineralwolle (9, 11) eine Breite von etwa 0,025 m aufweist.

8. Isolierplatte (31) nach einem der vorhergehenden Ansprüche, wobei eine an einer Seite der Isolierplatte angebrachte Deckplatte (33) so vorgesehen ist, dass die flexibel verformbare Isolierschicht aus Mineralwolle (9) auf einer Seite des Polymerschaumkerns (3) zwischen der Deckplatte (33) und dem Polymerschaumkern (3) angeordnet ist.

9. Isolierplatte (31) nach Anspruch 8, wobei die Deckplatte (33) einen Arm (39) aufweist, der von der Innenfläche der Deckplatte aus nach innen verläuft und in den Polymerschaumkern (3) oder die flexibel verformbare Isolierschicht aus Mineralwolle (9) eingreift, und der Arm (39) zwischen seinen Enden im rechten Winkel gekröpft ist und einen senkrecht zur Ebene der Deckplatte von der Innenfläche der Deckplatte weg verlaufenden ersten Abschnitt (41) und einen mit dem Ende des ersten Abschnitts (41) verbundenen zweiten Abschnitt (43) umfasst, wobei der zweite Abschnitt (43) parallel zur Ebene der Deckplatte von dem ersten Abschnitt aus nach hinten verläuft, und zwischen dem Polymerschaumkern (3) und der flexibel verformbaren Isolierschicht (9) ein Schlitz (45) zum Aufnehmen und Halten des zweiten Abschnitts (43) des Arms (39) ausgebildet ist.

10. Isolierplatte (1, 21, 25, 31) nach einem der vorhergehenden Ansprüche, wobei die Mineralwolle durch ein Glaswolle- oder ein Keramikfasermaterial ersetzt ist.

11. Verfahren zum Herstellen einer Isolierplatte (1, 21, 25, 31), das folgende Schritte umfasst:
Bereitstellen einer ersten Deckbahn (5),
Aufbringen von Schaumreaktanten auf die erste Deckbahn (5),
Bereitstellen einer zweiten Deckbahn (7) auf den Schaumreaktanten und der ersten Deckbahn,
Expandieren- und Aushärtenlassen der Schaumreaktanten, so dass ein Polymerschaumkern (3) entsteht,
Zuschneiden des Polymerschaumkerns (3) und der Deckbahnen (5, 7) zu Platten,
Bereitstellen einer Bahn aus flexibel verformbarer, isolierender Mineralwolle,
Zuschneiden der Bahn aus Mineralwolle zu Streifen (9, 11), deren Längsmaße dem Längsmaß der Platte und deren Breitenmaße mindestens dem Tiefenmaß der Platte entsprechen,
Ankleben eines ersten Streifens aus Mineralwolle (9) an eine Seite der Platte und eines zweiten Streifens aus Mineralwolle (11) an die gegenüberliegende Seite der Platte.

12. Verfahren zum Herstellen einer Isolierplatte (1, 21, 25, 31) nach Anspruch 11, wobei das Ankleben der Streifen aus Mineralwolle (9, 11) an die Seiten der Platte das derartige Ankleben der Streifen aus Mineralwolle an die Seiten der Platte umfasst, dass die Streifen aus Mineralwolle über die Vorderseite oder die Rückseite der Platte hinausragen.

13. Verfahren zum Herstellen einer Isolierplatte (21) nach Anspruch 11 oder 12, wobei das Verfahren das zusätzliche Ausschneiden eines Quadranten (23) aus der Isolierplatte umfasst.

14. Verfahren zum Herstellen einer Isolierplatte (25) nach Anspruch 11 oder 12, wobei das Verfahren zusätzlich das Ausschneiden einer V-förmigen Kerbe (27) aus einer Fläche der Isolierplatte und statt dem Ankleben des zweiten Streifens aus Mineralwolle an die gegenüberliegende Seite der Platte alternativ das Ankleben des zweiten Streifens aus Mineralwolle (29) an die der mit der Kerbe versehenen Fläche der Platte gegenüberliegende Fläche der Platte umfasst.

15. Verfahren zum Herstellen einer Isolierplatte (31) nach einem der Ansprüche 11 bis 14, wobei das Verfahren das Anbringen einer Deckplatte (33) auf einer Seite der Isolierplatte umfasst, wodurch die flexibel verformbare Isolierschicht aus Mineralwolle (9) auf einer Seite des Polymerschaumkerns zwischen der Deckplatte (33) und dem Polymerschaumkern (3) angeordnet wird.

## Revendications

1. Panneau d'isolation (1, 21, 25, 31) comportant une âme en mousse polymère (3) prise en sandwich entre un parement avant (5) collé sur une face avant de celle-ci et un parement arrière (7) collé sur une face arrière de celle-ci, **caractérisé en ce que** l'âme en mousse polymère est par ailleurs prise en sandwich entre une couche de laine minérale isolante déformable de manière élastique et apparente (9) collée sur un premier côté de celle-ci et une couche de laine minérale isolante déformable de manière élastique et apparente (11) collée sur un deuxième côté de celle-ci.

2. Panneau d'isolation (1, 21, 25, 31) selon la revendication 1, dans lequel la profondeur de la laine minérale (9, 11) allant de l'avant à l'arrière du panneau d'isolation est supérieure à la profondeur combinée de l'âme en mousse polymère (3) et des parements (5, 7) allant de l'avant à l'arrière de telle sorte que la laine minérale fait saillie au-delà de l'une parmi la face avant et la face arrière du panneau d'isolation.

3. Panneau d'isolation (1, 21, 25, 31) selon la revendication 2, dans lequel la laine minérale (9, 11) fait saillie au-delà des deux parmi la face avant et la face arrière du panneau d'isolation.

4. Panneau d'isolation (1, 31) selon l'une quelconque des revendications précédentes, dans lequel le panneau d'isolation est de forme parallélépipédique avec des faces de forme rectangulaire.

5. Panneau d'isolation (21, 25) selon l'une quelconque des revendications 1 à 3, dans lequel le panneau d'isolation est en forme de L en coupe transversale horizontale.

6. Panneau d'isolation (1, 21, 25, 31) selon l'une quelconque des revendications précédentes, dans lequel le panneau d'isolation a une largeur de l'ordre de 0,225 m.

7. Panneau d'isolation (1, 21, 25, 31) selon la revendication 6, dans lequel la couche de laine minérale isolante déformable de manière élastique (9, 11) collée sur le côté de l'âme en mousse polymère (3) a une largeur de l'ordre de 0,025 m.

8. Panneau d'isolation (31) selon l'une quelconque des revendications précédentes, dans lequel il y a une plaque de recouvrement (33) montée sur un côté du panneau d'isolation prenant en sandwich la couche de laine minérale isolante déformable de manière élastique (9) sur un côté de l'âme en mousse polymère (3) entre la plaque de recouvrement (33) et l'âme en mousse polymère (3).

9. Panneau d'isolation (31) selon la revendication 8, dans lequel la plaque de recouvrement (33) a un bras (39) s'étendant vers l'intérieur depuis la surface intérieure de la plaque de recouvrement à des fins de mise en prise de l'une parmi l'âme en mousse polymère (3) et la couche de laine minérale isolante déformable de manière élastique (9), et dans lequel le bras (39) est coudé selon un angle droit de manière intermédiaire entre ses extrémités et comporte une première section (41) s'étendant à l'opposé de la surface intérieure de la plaque de recouvrement de manière perpendiculaire par rapport au plan de la plaque de recouvrement et une deuxième section (43) reliée à l'extrémité de la première section (41), la deuxième section (43) s'étendant vers l'arrière depuis la première section de manière parallèle par rapport au plan de la plaque de recouvrement, et dans lequel il y a une fente (45) formée entre l'âme en mousse polymère (3) et la couche isolante déformable de manière élastique (9) à des fins de réception et de retenue de la deuxième section (43) du bras (39).

10. Panneau d'isolation (1, 21, 25, 31) selon l'une quelconque des revendications précédentes, dans lequel la laine minérale est remplacée par l'un parmi une laine de verre et un matériau de fibre céramique.

11. Procédé de fabrication d'un panneau d'isolation (1, 21, 25, 31) comportant les étapes consistant à :
mettre en oeuvre un premier parement (5) ;
poser des réactifs de mousse sur le premier parement (5) ;
mettre en oeuvre un deuxième parement (7) par-dessus les réactifs de mousse et le premier parement ;
laisser les réactifs de mousse se dilater et durcir, pour de ce fait former une âme en mousse polymère (3) ;
découper l'âme en mousse polymère (3) et les parements (5, 7) en panneaux ;
mettre en oeuvre une toile de laine minérale isolante déformable de manière élastique ;
découper la toile de laine minérale en bandes (9, 11), dans lequel les dimensions de longueur des bandes sont égales aux dimensions de longueur du panneau et les dimensions de largeur des bandes sont égales ou supérieures à la dimension de profondeur du panneau ;
coller une première bande de laine minérale (9) sur un côté du panneau et coller une deuxième bande de laine minérale (11) sur le côté opposé du panneau.

12. Procédé de fabrication d'un panneau d'isolation (1, 21, 25, 31) selon la revendication 11, dans lequel l'étape consistant à coller les bandes de laine minérale (9, 11) sur les côtés du panneau comporte l'étape consistant à coller les bandes de laine minérale sur les côtés du panneau de telle sorte que les bandes de laine minérale font saillie au-delà de l'une parmi la face avant et la face arrière du panneau.

13. Procédé de fabrication d'un panneau d'isolation (21), selon l'une quelconque des revendications 11 ou 12, dans lequel le procédé comporte l'étape supplémentaire consistant à découper un quart (23) en provenance du panneau d'isolation.

14. Procédé de fabrication d'un panneau d'isolation (25), selon l'une quelconque des revendications 11 ou 12, dans lequel le procédé comporte l'étape supplémentaire consistant à découper une rainure en forme de V (27) en provenance d'une face du panneau d'isolation, et au lieu de coller la deuxième bande de laine minérale sur le côté opposé du panneau, le procédé comporte l'autre étape consistant à coller la deuxième bande de laine minérale (29) sur la face du panneau à l'opposé de la face du panneau dotée de la rainure.

15. Procédé de fabrication d'un panneau d'isolation (31), selon l'une quelconque des revendications 11 à 14, dans lequel le procédé comporte l'étape consistant à attacher une plaque de recouvrement (33) sur un côté du panneau d'isolation, pour de ce fait prendre en sandwich la couche de laine minérale isolante déformable de manière élastique (9) sur un côté de l'âme en mousse polymère (3) entre la plaque de recouvrement (33) et l'âme en mousse polymère (3).
